(19) **Europäisches Patentamt / European Patent Office / Office européen des brevets**

(11) **EP 4 557 818 A1**

(12) **EUROPEAN PATENT APPLICATION**
published in accordance with Art. 153(4) EPC

(43) Date of publication:
21.05.2025 Bulletin 2025/21

(21) Application number: 23849203.7

(22) Date of filing: 17.07.2023

(51) International Patent Classification (IPC):
$H04W\ 28/02\ ^{(2009.01)}$    $H04W\ 72/044\ ^{(2023.01)}$

(52) Cooperative Patent Classification (CPC):
H04W 28/02; H04W 72/044

(86) International application number:
PCT/CN2023/107766

(87) International publication number:
WO 2024/027495 (08.02.2024 Gazette 2024/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 01.08.2022 CN 202210916786

(71) Applicant: ZTE CORPORATION
Shenzhen, Guangdong 518057 (CN)

(72) Inventors:
• XING, Weimin
  Shenzhen, Guangdong 518057 (CN)
• HU, Yuzhou
  Shenzhen, Guangdong 518057 (CN)
• LU, Youxiong
  Shenzhen, Guangdong 518057 (CN)

(74) Representative: Chimini, Francesco et al
Jacobacci & Partners S.p.A.
Piazza della Vittoria 11
25122 Brescia (IT)

(54) **INFORMATION DETERMINATION METHOD AND DEVICE, STORAGE MEDIUM, AND ELECTRONIC DEVICE**

(57) Embodiments of the present disclosure provide an information determination method and device, a storage medium, and an electronic device. The information determination method comprises: by means of the following steps, determining the number N2 of physical sidelink feedback channels (PSFCHs) and the transmit power of the PSFCHs simultaneously sent by a terminal device UE in one PSFCH occasion and determining common resource blocks corresponding to the N2 PSFCHs and the transmit power of the common resource blocks: determining N2 to be equal to N1, or determining N2 to be equal to Nmax, or determining the N2 PSFCHs from N1 PSFCHs according to a priority order of the PSFCHs; determining the transmit power of the PSFCHs to be a required power of the PSFCHs, or determining the transmit power of the PSFCHs to be X times the maximum power of the UE, or determining the transmit power of the PSFCHs to be the maximum or minimum value in the required power and the X times the maximum power of the UE; sending the determined N2 PSFCHs and the common resource blocks corresponding to the N2 PSFCHs; and determining the transmit power of the common resource blocks to be a required power of the common resource blocks.

Fig. 2

Determining a number N2 of Physical Sidelink Feedback Channels (PSFCHs) simultaneously transmitted by a User Equipment (UE) on one PSFCH occasion, and transmission power of the N2 PSFCHs, and determining common resource blocks corresponding to the N2 PSFCHs and transmission power of the common resource blocks in a following manner:

determining that N2 is equal to N1, or determining that N2 is equal to Nmax, or determining the N2 PSFCHs from N1 PSFCHs according to a priority order of the N1 PSFCHs;

determining that transmission power of a PSFCH is required power of the PSFCH, or determining that the transmission power of the PSFCH is X times maximum power of the UE, or determining that the transmission power of the PSFCH is a maximum or minimum value among the required power of the PSFCH and X times the maximum power of the UE, where X is a rational number not greater than 1;

transmitting the determined N2 PSFCHs and the common resource blocks corresponding to the N2 PSFCHs, wherein a sum of the transmission power of the common resource blocks and the transmission power of the N2 PSFCHs is less than or equal to the maximum power of the UE; and

determining that transmission power of a common resource block is required power of the common resource block, or determining that the transmission power of the common resource block is Y times the maximum power of the UE, or determining that the transmission power of the common resource block is a maximum or minimum value among the required power of the common resource block and Y times the maximum power of the UE, where Y is a rational number not greater than 1;

wherein N1 is a number of PSFCHs that need to be transmitted on the one PSFCH occasion, and Nmax is a maximum number of PSFCHs that are able to be transmitted on the one PSFCH occasion

S202

EP 4 557 818 A1

**Description**

The present disclosure claims priority to Chinese Patent Application No. 202210916786.6, filed with the China National Intellectual Property Administration on August 1, 2022 and entitled "Information Determination Method and Device, Storage Medium, and Electronic Device", which is incorporated herein by reference in its entirety.

**Technical Field**

Embodiments of the present disclosure relate to the field of communications, and in particular, to an information determination method and device, a storage medium, and an electronic device.

**Background**

Based on the current standard satisfying discussions, for a Physical Sidelink Control Channel (PSFCH) to meet Occupied Channel Bandwidth (OCB) requirements, simply using an Interlaced Resource Block (IRB) structure would consume a significant amount of frequency domain resources. For instance, one IRB at least includes 10 Physical Resource Blocks (PRBs), which ultimately results in a reduced number of PSFCHs that can be transmitted in one PSFCH occasion, affecting the capacity of PSFCH. A solution being considered is to divide the frequency domain resources on a PSFCH occasion into two categories: common resource blocks (RB) resources and resources for carrying feedback information. For the common RB resources, if multiple User Equipment (UEs) transmit PSFCH on the same PSFCH occasion, these UEs occupy the same common RB resources to send signals so as to satisfy the OCB requirements. In such a case, regardless of the number of UEs transmitting simultaneously, there is only one piece of overhead for satisfying the OCB requirements, namely the common RB resources. On the other hand, the resources carrying the feedback information enable different UEs to use different resources to feedback their respective information by means of resource mapping, and this is similar to traditional PSFCH resources. By combining these two categories of resources, it is possible to effectively control the overhead required to meet the OCB requirements while avoiding excessive impact on PSFCH capacity.

However, there are still many issues to be resolved when applying this approach. Firstly, the current PSFCH power control is not suitable for the above process. In addition, the above technology does not consider the scenario where a resource pool includes multiple channels or multiple RB sets in the frequency domain, and this scenario necessitates the design of related processes.

Direct communication may also be referred to as Sidelink (SL) communication. Henceforth, SL communication will be used to denote all direct communications. SL communication currently operates on licensed or dedicated bands, for example, Vehicle-to-Anything (V2X) communication may operate on bands specifically designated for V2X. In recent years, with the development of SL communication, the demand for SL transmission on traditional unlicensed bands has grown stronger. Before conducting SL transmission on an unlicensed band, a channel access process, commonly known as Listen Before Talk (LBT), is required according to the relevant band usage regulation, so as to avoid interference with equipment from other systems. Generally, if the channel resources are detected to be idle (i.e., LBT is successful) during a detection duration corresponding to the LBT process, the UE can continue to conduct transmission; otherwise, the UE needs to abandon the transmission.

In some regions, occupying unlicensed spectrum requires satisfying the OCB requirements, that is, if a device wants to access a channel for transmission, the bandwidth of the transmitted signal needs to occupy at least 80% of the bandwidth of the channel. For example, if the bandwidth of a channel is 20MHz, the transmitted signal is generally required to span at least 16MHz in the frequency domain. Some SL signals/channels also need to meet the OCB requirements, and such SL signals/channels include the Physical Sidelink Feedback Channel (PSFCH). However, PSFCH typically carries very few bits and occupies a very small bandwidth, such as a single Physical Resource Block (PRB). For PSFCH to meet the OCB requirements, its transmission bandwidth needs to be changed, and its power control also needs to be modified to adapt to the new transmission bandwidth. Additionally, considering that a UE may transmit multiple PSFCHs on multiple channels, a comprehensive design for PSFCH power control on multiple channels is required.

**Summary**

Embodiments of the present disclosure provide an information determination method and device, a storage medium, and an electronic device, which may at least solve a problem in the related art regarding power control when a PSFCH transmitted by a sidelink device in an unlicensed band cannot satisfy an OCB requirement.

According to the embodiments of the present disclosure, an information determination method is provided, including: determining a number N2 of Physical Sidelink Feedback Channels (PSFCHs) simultaneously transmitted by a User Equipment (UE) on one PSFCH occasion, and transmission power of the N2 PSFCHs, and determining common resource blocks corresponding to the N2 PSFCHs and transmission power of the common resource blocks in a following manner: determining that N2 is equal to N1, or determining that N2 is equal to Nmax, or determining the N2 PSFCHs from N1 PSFCHs according to a priority order of the N1 PSFCHs; determining that transmission power of a PSFCH is required power of the PSFCH, or determining that the transmission power of the PSFCH is X times maximum power of the UE, or determining that the transmission power of the PSFCH is a maximum or minimum value among the required power of the PSFCH and X times the maximum power of the UE, where X is a rational number not greater than 1; transmitting the determined N2 PSFCHs and the common resource blocks corresponding to the N2 PSFCHs, wherein a sum of the transmission power of the common resource blocks and the transmission power of the N2 PSFCHs is less than or equal to the maximum power of the UE; and determining that transmission power of a common resource block is required power of the common resource block, or determining that the transmission power of the common resource block is Y times the maximum power of the UE, or determining that the transmission power of the common resource block is a maximum or minimum value among the required power of the common resource block and Y times the maximum power of the UE, where Y is a rational number not greater than 1; wherein N1 is a number of PSFCHs that need to be transmitted on the one PSFCH occasion, and Nmax is a maximum number of PSFCHs that are able to be transmitted on the one PSFCH occasion.

According to another embodiment of the present disclosure, an information determination device is provided, including: a determination module, configured to determine a number N2 of Physical Sidelink Feedback Channels (PSFCHs) simultaneously transmitted by a User Equipment (UE) on one PSFCH occasion, and transmission power of the N2 P SFCHs, and determine common resource blocks corresponding to the N2 PSFCHs and transmission power of the common resource blocks in a following manner: determining that N2 is equal to N1, or determining that N2 is equal to Nmax, or determining the N2 PSFCHs from N1 PSFCHs according to a priority order of the N1 PSFCHs; determining that transmission power of a PSFCH is required power of the PSFCH, or determining that the transmission power of the PSFCH is X times maximum power of the UE, or determining that the transmission power of the PSFCH is a maximum or minimum value among the required power of the PSFCH and X times the maximum power of the UE, where X is a rational number not greater than 1; transmitting the determined N2 PSFCHs and the common resource blocks corresponding to the N2 PSFCHs, wherein a sum of the transmission power of the common resource blocks and the transmission power of the N2 PSFCHs is less than or equal to the maximum power of the UE; and determining that transmission power of a common resource block is required power of the common resource block, or determining that the transmission power of the common resource block is Y times the maximum power of the UE, or determining that the transmission power of the common resource block is a maximum or minimum value among the required power of the common resource block and Y times the maximum power of the UE, where Y is a rational number not greater than 1; wherein N1 is a number of PSFCHs that need to be transmitted on the one PSFCH occasion, and Nmax is a maximum number of PSFCHs that are able to be transmitted on the one PSFCH occasion.

According to still another embodiment of the present disclosure, a computer readable storage medium is provided. The computer readable storage medium stores a computer program, wherein the computer program, when running on a processor, is configured to execute the operations in any one of the method embodiments.

According to yet another embodiment of the present disclosure, an electronic device is provided, including a memory and a processor, wherein the memory stores a computer program, and the processor is configured to run the computer program so as to execute the operations in any one of the method embodiments.

According to the present disclosure, a number N2 of Physical Sidelink Feedback Channels (PSFCHs) simultaneously transmitted by a User Equipment (UE) on one PSFCH occasion, and transmission power of the N2 PSFCHs are determined, and common resource blocks corresponding to the N2 PSFCHs and transmission power of the common resource blocks are determined in a following manner: determining that N2 is equal to N1, or determining that N2 is equal to Nmax, or determining the N2 PSFCHs from N1 PSFCHs according to a priority order of the N1 PSFCHs; determining that transmission power of a PSFCH is required power of the PSFCH, or determining that the transmission power of the PSFCH is X times maximum power of the UE, or determining that the transmission power of the PSFCH is a maximum or minimum value among the required power of the PSFCH and X times the maximum power of the UE, where X is a rational number not greater than 1; transmitting the determined N2 PSFCHs and the common resource blocks corresponding to the N2 PSFCHs, wherein a sum of the transmission power of the common resource blocks and the transmission power of the N2 PSFCHs is less than or equal to the maximum power of the UE; and determining that transmission power of a common resource block is required power of the common resource block, or determining that the transmission power of the common resource block is Y times the maximum power of the UE, or determining that the transmission power of the common resource block is a maximum or minimum value among the required power of the common resource block and Y times the maximum power of the UE, where Y is a rational number not greater than 1; wherein N1 is a number of PSFCHs that need to be transmitted on the one PSFCH occasion, and Nmax is a maximum number of PSFCHs that are able to be transmitted on the one PSFCH occasion. By virtue of the solution, the problem in the related art regarding power control when a PSFCH transmitted by a sidelink device in an unlicensed band cannot satisfy an OCB requirement is solved, and the power control when the PSFCH transmitted by the sidelink device in the unlicensed band satisfies an OCB requirement is enabled.

## Brief Description of the Drawings

Fig. 1 is a block diagram of the hardware structure of a mobile terminal for implementing an information determination method according to the embodiments of the present disclosure;

Fig. 2 is a flowchart of an information determination method according to the embodiments of the present disclosure;

Fig. 3 is a schematic diagram of an information determination method according to the embodiments of the present disclosure; and

Fig. 4 is a structural block diagram of an information determination device according to the embodiments of the present disclosure.

## Detailed Description of the Embodiments

Embodiments of the present disclosure will be described below in detail with reference to the accompanying drawings and in conjunction with embodiments.

It should be noted that, terms such as "first" and "second" in the description, claims, and accompanying drawings of the present disclosure are used to distinguish similar objects, but are not necessarily used to describe a specific sequence or order.

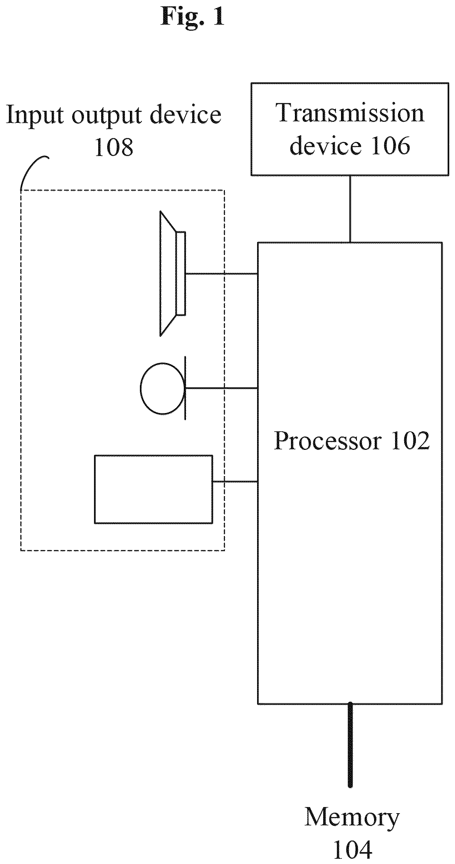

The method embodiments provided in the embodiments of the present disclosure may be executed in a mobile terminal, a computer terminal or a similar computing device. Taking the running on a mobile terminal as an example, Fig. 1 is a block diagram of the hardware structure of a mobile terminal for implementing an information determination method according to the embodiments of the present disclosure. As shown in Fig. 1, the mobile terminal may include one or more processors 102 (only one is shown in Fig. 1) (the one or more processors 102 may include but are not limited to processing apparatuses such as a microprocessor (e.g., Micro Controller Unit (MCU)) or a programmable logic device (e.g., a field Programmable Gate Array (FPGA))) and a memory 104 configured to store data. The mobile terminal may further include a transmission device 106 configured to have a communication function and an input/output device 108. Those having ordinary skill in the art may understand that the structure shown in Fig. 1 is merely exemplary, which does not limit the structure of the foregoing mobile terminal. For example, the mobile terminal may further include more or fewer components than shown in Fig. 1, or have a different configuration from that shown in Fig. 1.

The memory 104 may be configured to store a computer program, for example, a software program and a module of application software, such as a computer program corresponding to the information determination method in the embodiments of the present disclosure. The one or more processors 102 execute various function applications and data processing by running the computer program stored in the memory 104, thereby implementing the described information determination method. The memory 104 may include a high-speed random access memory, and may also include a non-volatile memory, such as one or more magnetic storage devices, flash memory, or other non-volatile solid-state memory. In some examples, the memory 104 may further include a memory remotely located from the one or more processors 102, which may be connected to the mobile terminal over a network. Examples of such networks include, but are not limited to, the Internet, intranets, local area networks, mobile communication networks, and combinations thereof.

The transmission device 106 is configured to receive or transmit data via one network. Specific examples of the described network may include a wireless network provided by a communication provider of the mobile terminal. In an example, the transfer device 106 may include a Network Interface Controller (NIC) that may be coupled to other network devices via a base station to communicate with the Internet. In an example, the transmission device 106 may be a Radio Frequency (RF) module configured to communicate wirelessly with the Internet.

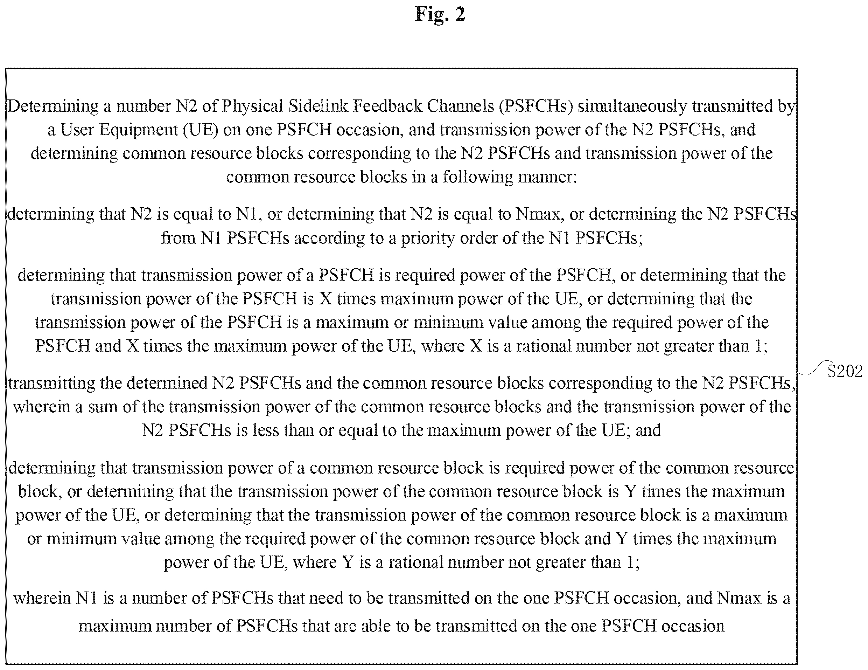

The embodiments of the present disclosure provide an information determination method running on a mobile terminal. Fig. 2 is a flowchart of an information determination method according to the embodiments of the present disclosure. As shown in Fig. 2, the flow includes the following operation S202.

In operation S202, a number N2 of Physical Sidelink Feedback Channels (PSFCHs) simultaneously transmitted by a User Equipment (UE) on one PSFCH occasion, and transmission power of the N2 PSFCHs are determined, and common resource blocks corresponding to the N2 PSFCHs and transmission power of the common resource blocks are determined in a manner described as follows.

It should be noted that the common resource block includes a common Resource Block (RB).

N2 is determined to be equal to N1, or N2 is determined to be equal to Nmax, or N2 PSFCHs are determined from N1 PSFCHs according to a priority order of the N1 PSFCHs.

It should be noted that determining the N2 PSFCHs is equivalent to determining the value of N2.

Transmission power of a PSFCH is determined to be equal to required power of the PSFCH, or the transmission power of the PSFCH is determined to be equal to X times maximum power of the UE, or the transmission power of the PSFCH is determined to be equal to a maximum or minimum value among the required power of the PSFCH and X times the maximum power of the UE, where X is a rational number not greater than 1;

the determined N2 PSFCHs and the common resource blocks corresponding to the N2 PSFCHs are transmitted, wherein a sum of the transmission power of the common resource blocks and the transmission power of the N2 PSFCHs is less than or equal to the maximum power of the UE; and

transmission power of a common resource block is determined to be equal to required power of the common resource block, or the transmission power of the common resource block is determined to be equal to Y times the maximum power of the UE, or the transmission power of the common resource block is determined to be equal to a maximum or minimum value among the required power of the common resource block and Y times the maximum power of the UE, where Y is a rational number not greater than 1; wherein N1 is a number of PSFCHs that need to be transmitted on the one PSFCH occasion, and Nmax is a maximum number of PSFCHs that are able to be transmitted on the one PSFCH occasion.

By means of the operations, the problem in the related art regarding power control when a PSFCH transmitted by a sidelink device in an unlicensed band cannot satisfy an OCB requirement is solved, and the power control when the PSFCH transmitted by the sidelink device in the unlicensed band satisfies an OCB requirement is enabled.

In an exemplary embodiment, determining the number N2 of the PSFCHs simultaneously transmitted by the UE on the one PSFCH occasion includes at least one of: in a case where N1 is less than or equal to Nmax, and power required for transmitting N1 PSFCHs and common resource blocks corresponding to the N1 PSFCHs does not exceed the maximum power of the UE, N2 is equal to N1; in a case where N1 is greater than Nmax, and power required for transmitting Nmax PSFCHs and common resource blocks corresponding to the Nmax PSFCHs does not exceed the maximum power of the UE, determining Nmax PSFCHs from the N1 PSFCHs according to the priority order of the N1 PSFCHs, wherein N2 is equal to Nmax; determining the N2 PSFCHs from the N1 PSFCHs according to the priority order of the N1 PSFCHs.

In an exemplary embodiment, determining the N2 PSFCHs from the N1 PSFCHs according to the priority order of the N1 PSFCHs includes: in a case where the N1 PSFCHs include one or more PSFCHs carrying an HARQ-ACK, transmitting the one or more PSFCHs carrying the HARQ-ACK according to the priority order; and then in a case where there are one or more PSFCHs carrying conflict information, sending the one or more PSFCHs carrying the conflict information according to the priority order; wherein N2 is greater than or equal to 1; or N2 is greater than or equal to

$\max\left(1, \sum_{i=1}^{K} M_i\right)$; wherein $M_i$ is a number of PSFCHs that carry the HARQ-ACK and have a priority of i or is a number of PSFCHs that carry the conflict information and have a priority of i-8; in a case where there are values of K that satisfy a condition that power required for transmitting $\max\left(1, \sum_{i=1}^{K} M_i\right)$ PSFCHs and common resource blocks corresponding to the $\max\left(1, \sum_{i=1}^{K} M_i\right)$ PSFCHs does not exceed the maximum power of the UE, then K is set to be a maximum value among the values of K that satisfy the condition, and in a case where there are no values of K that satisfy the condition that the power required for transmitting the $\max\left(1, \sum_{i=1}^{K} M_i\right)$ PSFCHs and the common resource blocks corresponding to the $\max\left(1, \sum_{i=1}^{K} M_i\right)$ PSFCHs does not exceed the maximum power of the UE, then K is equal to 0.

It should be noted that, the condition that the values of K satisfy refers to the condition that the power required for transmitting the $\max\left(1, \sum_{i=1}^{K} M_i\right)$ PSFCHs and the common resource blocks corresponding to the $\max\left(1, \sum_{i=1}^{K} M_i\right)$ PSFCHs does not exceed the maximum power of the UE.

In an exemplary embodiment, the required power of the PSFCH includes PSFCH power determined by a configured PSFCH power control parameter; the required power of the common resource block includes common resource block power determined by the configured PSFCH power control parameter or a common resource block power control parameter.

In an exemplary embodiment, X is equal to a ratio of a bandwidth occupied for transmitting one PSFCH to a bandwidth occupied for transmitting the N2 PSFCHs and the common resource blocks corresponding to the N2 PSFCHs; or, X is equal to a ratio of the bandwidth occupied for transmitting one PSFCH to a first value, wherein the first value is a sum of a bandwidth occupied for transmitting the N2 PSFCHs and m times a bandwidth occupied for transmitting the common resource blocks corresponding to the N2 PSFCHs, and m is a ratio of a power spectrum density of the common resource block to a power spectrum density of the PSFCH.

In an exemplary embodiment, Y is equal to a ratio of a bandwidth occupied for transmitting the common resource block to a bandwidth occupied for transmitting the N2 PSFCHs and the common resource blocks corresponding to the N2 PSFCHs; or, Y is equal to a ratio of m times the bandwidth occupied for transmitting the common resource block to a second value, wherein the second value is a sum of the bandwidth occupied for transmitting the N2 PSFCHs and m times a bandwidth occupied for transmitting the common resource blocks corresponding to the N2 PSFCHs, and m is a ratio of a power spectrum density of the common resource block to a power spectrum density of the PSFCH.

In an exemplary embodiment, the information determination method may further include: one PSFCH of the N2 PSFCHs and a common resource block corresponding to the one PSFCH are located on a same Resource Block (RB) set.

It should be noted that, in a case where the UE needs to transmit the N2 PSFCHs on a plurality of RB sets, at least one common RB needs to be transmitted on each RB set.

In an exemplary embodiment, the information determination method may further include: a number of common Physical Resource Blocks (PRBs) included in a common resource block i of one RB set i is $M_i^{comm}$, wherein the numbers of common PRBs included in common resource blocks corresponding to different RB sets are the same or different, and relative frequency domain positions of the common resource blocks on the different RB sets are the same or different.

In an exemplary embodiment, the information determination method may further include: N1 is a number of PSFCHs scheduled to be transmitted by the UE; or N1 is a number of PSFCHs scheduled to be transmitted on one or more channels successfully accessed by the UE through a Listen Before Talk (LBT) procedure.

Apparently, the embodiments described above are merely some of the embodiments of the present disclosure, rather than all of the embodiments. In order to better understand the described method, the described process will be described below in conjunction with the embodiments, but is not used to limit the technical solution of the embodiments of the present disclosure. The following embodiments are exemplary embodiments.

The exemplary embodiments of the present disclosure are directed to a scenario where a device (e.g., User Equipment (UE)) needs to transmit N1 PSFCHs on a PSFCH occasion on a resource pool, and the maximum number of PSFCHs that are able to be transmitted by the UE on one PSFCH occasion is Nmax. The exemplary embodiments of the present disclosure provide a method for determining the number N2 of PSFCHs that are able to be finally transmitted by the UE, determining the transmission power of the N2 PSFCHs, and determining the transmission power of common RBs corresponding to the N2 PSFCHs.

In an embodiment, the resource pool may include a plurality of RB sets, and a channel will be designated by an RB set hereinafter. If a UE needs to perform transmission on a plurality of RB sets, then an OCB requirement needs to be satisfied on each of the plurality of RB sets, i.e., in an example, a common RB needs to be transmitted on each of the transmitted RB sets. These common RBs may also be referred to as a special PSFCH; however, in order to distinguish such special PSFCH from a common PSFCH, a channel/signal used for extending a PSFCH to satisfy the OCB requirement will be referred to as a common RB hereinafter.

In an embodiment, N1 is the number of PSFCHs that the UE is scheduled to transmit. In another embodiment, N1 is the number of PSFCHs scheduled for transmission on one or more channels successfully accessed by the UE using the LBT procedure.

In an embodiment, determining the transmission power of the common RBs corresponding to the N2 PSFCHs includes: determining M(N2) RB sets on which the N2 PSFCHs are to be transmitted, and for each RB set, determining transmission power of a common RB or a common PRB on the RB set. It should be noted that, the common RB includes one or more common PRBs in one RB set.

The number of common PRBs included in a common RB i of one RB set i is $M_i^{comm}$, that is, one common RB includes $M_i^{comm}$ continuous or discrete PRBs. The numbers of common PRBs included in common resource blocks corresponding to different RB sets may be the same or different, and relative frequency domain positions of the common resource blocks on the different RB sets may be the same or different. For example, in an example, the common RBs may be discrete frequency domain IRBs (Interface Resource Block), and common RBs on different RB sets correspond to the same IRB number (in this case, the number of PRBs included in each common RB may be the same or different). In another example, common RBs on different RB sets may correspond to different IRB numbers (in this case, the numbers of PRBs included in each common RB may be the same or different).

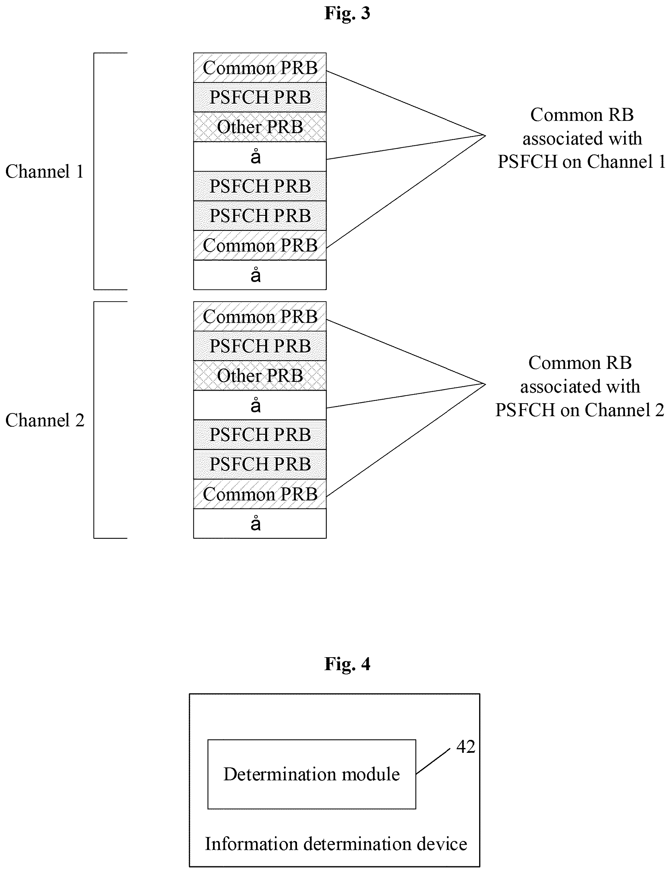

In an exemplary embodiment, as shown in Fig. 3, in a case where the UE needs to transmit one or more PSFCHs on channel 1, to satisfy the OCB requirement, a common RB or a common PRB needs to be transmitted on channel 1.

As an exemplary embodiment, a method for determining the number N2 of the PSFCHs that are able to be finally transmitted by the UE, a method for determining the transmission power of the N2 PSFCHs, and a method for determining the transmission power of common RBs corresponding to the N2 PSFCHs include the following operations.

In operation 1, the required power of N1 PSFCHs to be transmitted and the required power of corresponding common RBs are determined. For example, the required power of the PSFCH may be embodied as $P_{PSFCH,one}$, Pmini in the examples, and the required power of the common RB may be embodied as $P_{comm}$, X*Pmin in the examples, where X being equal to 1 is a special case. Alternatively, as in Examples 8 and 9 below, only a power relative ratio between the PRB of the PSFCH to be transmitted and the PRB of the common RB needs to be determined.

In operation 2, in a case where N1 is less than or equal to Nmax, and power required for transmitting all N1 PSFCHs and their corresponding common RBs does not exceed total power, N2 is equal to N1. Alternatively, in a case where power required for transmitting Nmax PSFCHs and common RBs corresponding to the Nmax PSFCHs does not exceed the maximum total power (in a scenario where N1 is greater than Nmax, and Nmax PSFCHs are selected from N1 PSFCHs according to the priority), N2 is equal to Nmax. Alternatively, for other scenarios, N2 PSFCHs and common RBs corresponding to the N2 PSFCHs are selected according to the priority order for transmission, and it is ensured that the transmission power does not exceed the maximum total power.

In operation 3, the determined N2 PSFCHs and the common RBs corresponding to N2 PSFCHs are transmitted, and transmission power of the N2 PSFCHs and the common RBs are determined, for example, the transmission power may be the required power of the described PSFCHs.

Scenario 1

In this scenario, it is assumed that downlink (DL) based PSFCH power control is enabled, that is, the downlink power control parameter d1-P0-PSFCH is configured or provided.

A reference or required power $P_{PSFCH,one}$ for a PSFCH transmission may be determined based on a downlink power control parameter, and the determination may be achieved in a manner the same as a current protocol method:

$$P_{PSFCH,one} = P_{O,PSFCH} + 10\log_{10}(2^\mu) + \alpha_{PSFCH} \cdot PL;$$

where $P_{O,PSFCH}$ is indicated by d1-P0-PSFCH, $\alpha_{PSFCH}$ is indicated by dl-Alpha-PSFCH or is equal to 1, $\mu$ is determined based on the currently used Sub-Carrier Spacing (SCS), and PL is the path loss measured based on a Reference Signal (RS).

Example 1

The transmission power $P_{comm\_one}$ of one PRB in one Common RB may be determined based on the downlink power control parameter, and the transmission power $P_{comm}$ of one Common RB may be further determined.

In an example, the common RB and the PSFCH use the same parameter of dl-P0-PSFCH and dl-Alpha-PSFCH parameters, and the transmission power of a certain PRB contained in the common RB is equal to the power of one PRB of the PSFCH, that is:

$$P_{comm\_one} = P_{PSFCH,one} = P_{O,PSFCH} + 10\log_{10}(2^\mu) + \alpha_{PSFCH} \cdot PL;$$

Further, the reference or required power $P_{comm,i}$ of a common RB i corresponding to one RB set i is:

$$P_{comm,i} = P_{O,PSFCH} + 10\log_{10}(2^\mu \cdot M_i^{comm}) + \alpha_{PSFCH} \cdot PL;$$

where $P_{O,PSFCH}$ is indicated by dl-P0-PSFCH, $\alpha_{PSFCH}$ is indicated by dl-Alpha-PSFCH or is equal to 1, $\mu$ is determined based on the currently used Sub-Carrier Spacing (SCS), PL is the path loss measured based on a Reference Signal (RS), and $M_i^{comm}$ is the number of PRBs included in common RB i.

In another example, common RBs and PSFCHs use the same dl-P0-PSFCH and dl-Alpha-PSFCH parameters, but the power of one PRB in the common RB is X times the power of one PSFCH PRB, or has an offset Y relative to the power of one PSFCH PRB, then $P_{comm\_one} = P_{PSFCH,one} + 10\log_{10} X$, or, $P_{comm\_one} = P_{PSFCH,one} + Y$.

Herein, X and Y may be pre-defined by a protocol or configured by a network and a base station, or pre-configured. By configuring an X value less than 1 or a negative Y value, power allocated by a common RB can be reduced, then reference or required power $P_{comm,i}$ of the common RB i corresponding to one RB set i is:

$$P_{comm,i} = P_{O,PSFCH} + 10\log_{10}(2^\mu \cdot M_i^{comm} \cdot X) + \alpha_{PSFCH} \cdot PL;$$

or

$$P_{comm,i} = P_{O,PSFCH} + 10\log_{10}(2^{\mu} \cdot M_i^{comm}) + \alpha_{PSFCH} \cdot PL + Y;$$

wherein $P_{O,PSFCH}$ is indicated by the dl-P0-PSFCH, $\alpha_{PSFCH}$ is indicated by the dl-Alpha-PSFCH or is equal to 1, $\mu$ is determined according to a currently used Sub-Carrier Spacing (SCS), PL is the path loss measured based on a Reference Signal (RS), and $M_i^{comm}$ is the number of PRBs included in a common RB i.

It can be seen that there is a fixed relationship between the power of one common RB i and the power of each PRB contained in the common RB i, and the two are actually equivalent, and the linear power of common RB i is obtained by linearly adding the powers of $M_i^{comm}$ PRBs.

Example 2

In another example, the power $P_{comm\_one}$ sent by one PRB in one Common RB is determined based on the downlink power control parameters, and the common RB uses separately configured P0 and Alpha downlink power control parameters, that is:

$$P_{comm\_one} = P_{O,common} + 10\log_{10}(2^{\mu}) + \alpha_{common} \cdot PL.$$

The advantage of doing so is that more power can be allocated to the PSFCH to avoid excessive power occupied by the common RB. Represented by the parameters of dl-P0-common and dl-Alpha-common herein, the reference or required power of the common RB i corresponding to one RB set i is $P_{comm,i}$:

$$P_{comm,i} = P_{O,common} + 10\log_{10}(2^{\mu} \cdot M_i^{comm}) + \alpha_{common} \cdot PL;$$

where $P_{O,common}$ is indicated by the dl-P0-common, $\alpha_{PSFCH}$ is indicated by the dl-Alpha-common or is equal to 1, $\mu$ is determined by a currently used Sub-Carrier Spacing (SCS), PL is a path loss measured based on a Reference Signal (RS), and $M_i^{comm}$ is the number of PRBs included in a common RB i.

Example 3

In an example, the power $P_{comm\_one}$ sent by one PRB of the Common RB may be directly configured by the power control parameters, and the common RB may adopt the directly configured power, instead of performing calculation based on the power control parameters such as P0 and Alpha. The advantage of doing so is that more power can be allocated to the PSFCHs, thereby preventing the common RBs from occupying too much power. For example, a reference or required power $P_{comm\_one}$ of a common RB i corresponding to the RB set i may be obtained according to a configured $P_{comm,i}$, and a transmission power may be directly configured or a Power Spectrum Density (PSD, which represents a power of a unit bandwidth, such as an Energy Per Resource Element (EPRE)) thereof may be configured, or a ratio to a maximum transmission power $P_{CMAX}$ of the UE may be configured, for example, the power may be can be y/X times the maximum transmission power, and generally, y/X is less than 1.

It should be noted that the calculation of transmission power of a PSFCH and of a common RB is described in Examples 1 to 3, and a process of determining N2 and the common RBs to be transmitted is described starting from Example 4.

Example 4

If N1 is less than or equal to Nmax, and the sum of the transmission power of N1 PSFCHs plus the transmission power of all common RBs to be transmitted does not exceed $P_{CMAX}$, that is, the following condition is satisfied:

$$10\log_{10}\left(N_1 * 10^{\wedge}(P_{PSFCH,one}/10) + \sum_{i=1}^{M(N1)} 10^{\wedge}(P_{comm,i}/10)\right) \leq P_{CMAX};$$

wherein M(N1) is the number of RB sets or channels in which the N1 PSFCHs are located, and as stated above, $P_{comm,i}$ is the transmission power of the common RB on the RB set i. If the common RBs on the M(N1) RB set have the same power and the power is equal to $P_{comm}$, the above formula may be simplified as:

$$10\log_{10}\left(N_1 * 10\,\hat{}\,(P_{PSFCH,one}/10) + M(N1) * 10\,\hat{}\,(P_{comm}/10)\right) \leq P_{CMAX};$$

If the foregoing condition is satisfied, N2=N1, the transmission power of one PSFCH k is equal to $P_{PSFCH,one}$, the transmission power of one PRB on one common RB is equal to $P_{comm\_one}$ determined in the foregoing Examples 1 to 3, and further the transmission power of one common RB i is equal to $P_{comm,i}$ determined in the foregoing Examples 1 to 3.

It should be noted that the symbol * in the present disclosure is used for representing multiplication.

Example 5

If N1 is less than or equal to Nmax, but the transmission power of N1 PSFCHs plus the transmission power of all common RBs to be transmitted exceeds $P_{CMAX}$, that is, the condition in Example 4 is not satisfied, then the process for the UE to determine the transmission of the N2 PSFCHs is as follows.

Firstly, if there are one or more PSFCHs carrying a HARQ-ACK, the one or more PSFCHs carrying the HARQ-ACK should be transmitted first according to a priority order (in a sequence from small priority value to large priority value, i.e., in an ascending order of the priority values). Then, if there are one or more PSFCHs carrying conflict information, then the one or more PSFCHs carrying the conflict information are transmitted according to the priority order (in a sequence from small priority value to large priority value, i.e., in an ascending order of the priority values), under the premise of ensuring $N_2 \geq \max\left(1, \sum_{i=1}^{K} M_i\right)$, wherein for $1 \leq i \leq 8$, $M_i$ is the number of PSFCHs with a priority value of i and carrying the HARQ-ACK, for i > 8, namely, $8 < i \leq 16$, $M_i$ is the number of PSFCHs with priority values of i-8 and carrying conflict information, wherein the value of K is the maximum value satisfying the following condition (if no value of K satisfying the following condition is found, then K is equal to 0):

$$10\log_{10}\left(\max(1, \textstyle\sum_{i=1}^{K} M_i) * 10\,\hat{}\,(P_{PSFCH,one}/10) + \textstyle\sum_{j=1}^{M(K)} 10\,\hat{}\,(P_{comm,j}/10)\right) \leq P_{CMAX};$$

wherein when the value of M(K) is K, the number of RB sets occupied by the $iN\max(1, \sum_{i=1}^{K} M_i)$ PSFCHs or $\sum_{i=1}^{K} M_i$ PSFCHs is the number of corresponding common RBs to be transmitted.

The condition may be described as follows: the value of K is made equal to the maximum value of K that satisfies that the total power required for transmitting $\max(1, \sum_{i=1}^{K} M_i)$ PSFCHs and their corresponding M(K) common RBs does not exceed $P_{CMAX}$ in accordance with the above priority order.

In an example, after the above N2 value is determined, the transmission power for one PSFCH k of the N2 PSFCHs is equal to $P_{PSFCH,one}$ or is equal to a value obtained by subtracting the power occupied by the common RBs from the maximum power, and then equally dividing the power to N2 PSFCHs, namely

$$10\log_{10}(10\,\hat{}\,(P_{CMAX}/10) - \textstyle\sum_{j=1}^{M(N2)} 10\,\hat{}\,(P_{comm,j}/10)) - 10\log_{10}(N_2),$$

wherein M(N2) is the number of the RB sets occupied by the N2 selected PSFCHs, that is, the number of the corresponding common RBs to be transmitted; or M(N2) is equal to the maximum or minimum of the two values.

In an example, the transmission power of a PSFCH k may also be equal to the following value:

$$\min\left(P_{CMAX} - 10\log_{10}(N_2), P_{PSFCH,one}\right).$$

In an example, after the above N2 value is determined, then:

The transmission power of a PRB on one common RB is equal to $P_{comm\_one}$ in the foregoing example, or the power of one PRB on one common RB is equal to a value obtained by subtracting power occupied by the PSFCHs from the maximum power, and then equally dividing onto the common RBs according to the same power spectrum density, that is, power of one PRB of one common RB is equal to:

$$10\log_{10}(10^{\wedge}(P_{CMAX}/10) - N_2 * 10^{\wedge}(P_{PSFCH,one}/10)) - 10\log_{10} \sum_{i=1}^{M(N2)} M_i^{comm}.$$

Alternatively, the power of one PRB of one common RB is equal to the maximum value or the minimum value of the above two values.

In an example, the transmission power of one PRB on one common RB is equal to the following value:

$$\min\left(P_{CMAX} - 10\log_{10} \sum_{i=1}^{M(N2)} M_i^{comm}\right), P_{comm\_one}\right).$$

It should be noted that the Examples 5a, 7a and 7b relate to a method that ensures the transmission power and the number of the transmitted PSFCHs when the power is limited, thereby reducing the power or the number of common PRBs.

Example 5a

If N1 is less than or equal to Nmax, and:

(1) the transmission power of N1 PSFCHs plus the transmission power of all common RBs to be transmitted exceeds $P_{CMAX}$, i.e., the condition in Example 4 is not satisfied;

(2) The transmission power of N1 PSFCHs does not exceed $P_{CMAX}$;

then, the UE transmits N1 PSFCHs, i.e., N2 = N1, wherein the transmission power of one PSFCH k is equal to $P_{PSFCH,one}$, and the remaining power is allocated to the common RBs.

In an example, the remaining power, i.e., the maximum power minus the power used by the N2 PSFCHs, is allocated to the common PRBs to be transmitted, including: firstly determining the power of the common PRB according to Examples 1 to 3, and then in the case where the maximum power is not exceeded, determining the maximum number L of common PRBs that are able to be transmitted. For example, L may be obtained by dividing the linear value of the remaining power by the linear power of the common PRB and then rounding down the dividing result. The UE may select not more than L common PRBs for transmission, and the transmission power of each common PRB is $P_{comm\_one}$.

In an example, the remaining power, i.e., the maximum power minus the power used by the N2 PSFCHs, is allocated to the common RBs to be transmitted, including: firstly determining M(N2) common RBs corresponding to the N2 PSFCHs, then determining the number $\sum_{i=1}^{M(N2)} M_i^{comm}$ of common PRBs included in the M(N2) common RBs, and finally evenly allocating the remaining power to the $\sum_{i=1}^{M(N2)} M_i^{comm}$ common PRBs.

Example 6

If N1 is greater than Nmax, and the sum of the transmission power of Nmax PSFCHs selected according to the described priority order and the transmission power of all common RBs to be transmitted does not exceed $P_{CMAX}$, that is, the following condition is satisfied:

$$10\log_{10}\left(N_{max} * 10^{\wedge}(P_{PSFCH,one}/10) + \sum_{i=1}^{M(N max)} 10^{\wedge}(P_{comm,i}/10)\right) \leq P_{CMAX};$$

M(Nmax) is the number of RB sets or channels where the selected Nmax PSFCHs are located, and as stated above, $P_{comm,i}$ is the transmission power of the common RB on the RB set i.

If the foregoing condition is satisfied, N2 = Nmax, the transmission power of one PSFCH k is equal to $P_{PSFCH,one}$, the transmission power of one PRB on one common RB is equal to $P_{comm\_one}$ determined in the foregoing Examples 1 to 3, and further the transmission power of one common RB i is equal to $P_{comm,i}$ determined in the foregoing Examples 1 to 3.

Example 7

If N1 is greater than Nmax, and the transmission power of Nmax PSFCHs selected according to the described priority order plus the transmission power of all common RBs to be transmitted exceeds $P_{CMAX}$, i.e., the condition described in Example 6 is not satisfied, then the process for the UE to determine the transmission of the N2 PSFCHs is as follows.

Firstly, if there are one or more PSFCHs carrying a HARQ-ACK, the one or more PSFCHs carrying the HARQ-ACK should be transmitted first according to a priority order (in a sequence from small priority value to large priority value, i.e., in an ascending order of the priority values); then, if there are one or more PSFCHs carrying conflict information, then the one or more PSFCHs carrying the conflict information are transmitted according to the priority order (in a sequence from small priority value to large priority value, i.e., in an ascending order of the priority values), furthermore, it should be ensured that $n_2 \geq \max\left(1, \sum_{i=1}^{k} m_i\right)$. For $1 \leq i \leq 8$, $M_i$ is the number of PSFCHs having a priority value of i and carrying the HARQ-ACK; for i > 8, namely, $8 < i \leq 16$, $M_i$ is the number of PSFCHs with priority values of i-8 and carrying conflict information, wherein the value of K is the maximum value satisfying the following condition (if no value of K satisfying the following condition is found, then K is equal to 0):

$$10\log_{10}\left(\max(1, \sum_{i=1}^{K} M_i) * 10^{\wedge}(P_{PSFCH,one}/10) + \sum_{j=1}^{M(K)} 10^{\wedge}(P_{comm,j}/10)\right) \leq P_{CMAX}.$$

wherein when the value of M(K) is K, the number of RB sets occupied by the $iNmax(1, \sum_{i=1}^{K} M_i)$ PSFCHs or $\sum_{i=1}^{K} M_i$ PSFCHs is the number of corresponding common RBs to be transmitted.

The condition may be described as follows: the value of K is made equal to the maximum value of K that satisfies that the total power required for transmitting $\max(1, \sum_{i=1}^{K} M_i)$ PSFCHs and their corresponding M(K) common RBs does not exceed $P_{CMAX}$ in accordance with the above priority order.

In an example, after the above N2 value is determined, the transmission power for one PSFCH k of the N2 PSFCHs is equal to $P_{PSFCH,one}$ or is equal to a value obtained by subtracting the power occupied by the common RBs from the maximum power, and then equally dividing the power to N2 PSFCHs, namely

$$10\log_{10}(10^{\wedge}(P_{CMAX}/10) - \sum_{j=1}^{M(N2)} 10^{\wedge}(P_{comm,j}/10)) - 10\log_{10}(N_2),$$

wherein M(N2) is the number of the RB sets occupied by the N2 selected PSFCHs, that is, the number of the corresponding common RBs to be transmitted; or M(N2) is equal to the maximum or minimum of the two values.

In an example, the transmission power of a PSFCH k may also be equal to the following value:

$$\min\left(P_{CMAX} - 10\log_{10}(N_2), P_{PSFCH,one}\right).$$

In an example, after the above N2 value is determined, then:
The transmission power of a PRB on one common RB is equal to $P_{comm\_one}$ in the foregoing example, or the power of one PRB on one common RB is equal to a value obtained by subtracting power occupied by the PSFCHs from the maximum power, and then equally dividing onto the common RBs according to the same power spectrum density, that is, power of one PRB of one common RB is equal to:

$$10\log_{10}(10^{\wedge}(P_{CMAX}/10) - N_2 * 10^{\wedge}(P_{PSFCH,one}/10)) - 10\log_{10}\sum_{i=1}^{M(N2)} M_i^{comm}).$$

Alternatively, the power of one PRB of one common RB is equal to the maximum value or the minimum value of the above two values.

In an example, the transmission power of one PRB on one common RB is equal to the following value:

$$\min\left(P_{CMAX} - 10\log_{10}\sum_{i=1}^{M(N2)} M_i^{comm}), P_{comm\_one}\right).$$

Example 7a

If N1 is greater than Nmax, and:

(1) the transmission power of the Nmax PSFCHs selected according to the described priority order plus the transmission power of all common RBs to be transmitted exceeds $P_{CMAX}$ , i.e., the condition in Example 6 is not satisfied.

(2) The transmission power of the Nmax PSFCHs does not exceed $P_{CMAX}$.

The UE transmits Nmax PSFCHs, i.e., N2 = Nmax, wherein the transmission power of one PSFCH k is equal to $P_{PSFCH,one}$, and the remaining power is allocated to common RBs.

In an example, the remaining power, i.e., the maximum power minus the power used by the N2 PSFCHs, is allocated to the common PRBs to be transmitted, including: firstly determining the power of the common PRB according to Examples 1 to 3, and then in the case where the maximum power is not exceeded, determining the maximum number L of common PRBs that are able to be transmitted. For example, L may be obtained by dividing the linear value of the remaining power by the linear power of the common PRB and then rounding down the dividing result. The UE may select not more than L common PRBs for transmission, and the transmission power of each common PRB is $P_{comm\_one}$.

In an example, the remaining power, i.e., the maximum power minus the power used by the N2 PSFCHs, is allocated to the common RBs to be transmitted, including: firstly determining M(N2) common RBs corresponding to the N2 PSFCHs, then determining the number $\sum_{i=1}^{M(N2)} M_i^{comm}$ of common PRBs included in the M(N2) common RBs, and finally evenly allocating the remaining power to the $\sum_{i=1}^{M(N2)} M_i^{comm}$ common PRBs.

Example 7b

If (1) the transmission power of the N2 PSFCHs selected according to the described priority order plus the transmission power of all common RBs to be transmitted exceeds $P_{CMAX}$; and (2) the transmission power of N2 PSFCHs does not exceed $P_{CMAX}$.

The UE transmits N2 PSFCHs, wherein the transmission power of one PSFCH k is equal to $P_{PSFCH,one}$, and the remaining power is allocated to the common RBs.

In an example, the remaining power, i.e., the maximum power minus the power used by the N2 PSFCHs, is allocated to the common PRBs to be transmitted, including: firstly determining the power of the common PRB according to Examples 1 to 3, and then in the case where the maximum power is not exceeded, determining the maximum number L of common PRBs that are able to be transmitted. For example, L may be obtained by dividing the linear value of the remaining power by the linear power of the common PRB and then rounding down the dividing result. The UE may select not more than L common PRBs for transmission, and the transmission power of each common PRB is $P_{comm\_one}$.

In an example, when the common PRBs to be transmitted are selected, common PRBs capable of satisfying the OCB requirement may be first selected. For example, one RB set may be divided into several unit bandwidths, for example, one RB set is 20 MHz, and one unit bandwidth is 2 MHz/5 MHz. In a case where there is a PSFCH transmitted in one unit bandwidth, a common PRB in the unit bandwidth may not be transmitted, and if no PSFCH is transmitted in one unit bandwidth, a common PRB may be filled and transmitted. That is, in an example, the common PRB and the PSFCH PRB are distributed in one RB set as evenly as possible to satisfy the OCB requirement.

In an example, the remaining power, i.e., the maximum power minus the power used by the N2 PSFCHs, is allocated to the common RBs to be transmitted, including: firstly determining M(N2) common RBs corresponding to the N2 PSFCHs, then determining the number $\sum_{i=1}^{M(N2)} M_i^{comm}$ of common PRBs included in the M(N2) common RBs, and finally evenly allocating the remaining power to the $\sum_{i=1}^{M(N2)} M_i^{comm}$ common PRBs.

Scenario 2

In this scenario, it is assumed that downlink (DL) based PSFCH power control is not enabled, that is, the downlink power control parameter dl-P0-PSFCH is not configured or not provided.

Example 8

The process of the UE determining the N2 PSFCHs to be transmitted is as follows: firstly, if there are one or more PSFCHs carrying a HARQ-ACK, the one or more PSFCHs carrying the HARQ-ACK should be transmitted first according to the priority order (in a sequence from small priority value to large priority value, i.e., in an ascending order of the priority values); then, if there are one or more PSFCHs carrying conflict information, the one or more PSFCHs carrying the conflict information are transmitted according to the priority order (in a sequence from small priority value to large priority value, i.e., in an ascending order of the priority values), and it should be ensured $N_2 \geq 1$. In another embodiment, N2 is less than or equal to Nmax, for example $N_2 = min(Nmax, N1)$.

In an example, the transmission power of one PRB in the common RB is the same as the transmission power of one PSFCH PRB, that is, the common RB and the PSFCH RB have the same PSD or EPRE, and in such a case, the transmission power for one PSFCH k in the N2 PSFCHs is equal to:

$$P_{PSFCH,k} = P_{CMAX} - 10\log_{10}(N2 + \sum_{i=1}^{M(N2)} M_i^{comm});$$

wherein M(N2) refers to M(N2) RB sets or channels occupied by the N2 PSFCHs, that is, M(N2) common RBs corresponding to the N2 PSFCHs, and $M_i^{comm}$ is the number of PRBs included in common RB i. That is, $P_{CMAX}$ is equally divided into all the transmitted PRBs, and these PRBs include the common PRBs in the common RBs and the PRBs of the PSFCHs.

In this case, the power of the common PRB is equal to the power of the PSFCH PRB, and the transmission power for a common RB i is:

$$P_{comm,i} = P_{PSFCH} + 10\log_{10}M_i^{comm};$$

where $P_{PSFCH}$ is calculated as above $P_{PSFCH,k}$.

Example 9

The process of the UE determining the N2 PSFCHs to be transmitted is as follows: firstly, if there are one or more PSFCHs carrying a HARQ-ACK, the one or more PSFCHs carrying the HARQ-ACK should be transmitted first according to the priority order (in a sequence from small priority value to large priority value, i.e., in an ascending order of the priority values); then, if there are one or more PSFCHs carrying conflict information, the one or more PSFCHs carrying the conflict information are transmitted according to the priority order (in a sequence from small priority value to large priority value, i.e., in an ascending order of the priority values), and it should be ensured $N_2 \geq 1$. In another embodiment, N2 is less than or equal to Nmax, for example $N_2 = min(Nmax, N1)$.

In an example, the transmission power of one PRB in the common RB is different from the transmission power of one PSFCH PRB, for example, the power of one PRB in the common RB is X times the power of one PSFCH PRB, where X is a rational number, then the power of common RBs can be reduced by configuring or defining X as a value less than 1. In conclusion, common RBs and PSFCH PRBs may have different PSDs or EPREs, and in such a case, the transmission power for one PSFCH k in N2 is equal to:

$$P_{PSFCH,k} = P_{CMAX} - 10\log_{10}(N2 + X * \sum_{i=1}^{M(N2)} M_i^{comm});$$

Alternatively, the power of one PRB of equivalent common RBs is the power of one PSFCH PRB plus an offset Y. where M(N2) refers to M(N2) RB sets or channels located or occupied by the N2 PSFCHs, that is, M(N2) common RBs corresponding to the N2 PSFCHs, and $M_i^{comm}$ is the number of PRBs included in the common RBs i. The power of one common PRB is $P_{comm\_one} = P_{PSFCH,k} + 10\log_{10} X$: Or $P_{comm\_one} = P_{PSFCH,k} + Y$.

In this case, the transmission power for one common RB i is $P_{common,i} = P_{PSFCH} + 10\log_{10}(X * M_i^{comm})$, where $P_{PSFCH}$ is calculated as above $P_{PSFCH,k}$.

Example 10

In an example, the transmission power of one common PRB in the common RBs is the same as the transmission power of one PSFCH PRB, i.e., the common RBs have the same PSD or EPRE as the PSFCH RBs. A minimum transmission power of one PRB is set as Pmini.

1) If N1 is less than or equal to Nmax, and the sum of the transmission power of N1 PSFCHs and the transmission power of all common RBs to be transmitted does not exceed $P_{CMAX}$, that is, the following condition is satisfied:

$$\text{Pmini} + 10\log_{10}\left(N_1 + \sum_{i=1}^{M(N1)} M_i^{comm}\right) \leq P_{CMAX};$$

wherein M(N1) is the number of the RB sets or channels in which the N1 PSFCHs are located, and $M_i^{comm}$ has the same meaning as that in the above example.

If the foregoing condition is satisfied, N2=N1, and the transmission power $P_{PSFCH,k}$ of one PSFCH k is equal to Pmini, or equal to $P_{PSFCH,k} = P_{CMAX} - 10\log_{10}(N1 + \sum_{i=1}^{M(N1)} M_i^{comm})$ , or equal to a maximum value of the two values, or equal to a minimum value of the two values.

In this case, the transmission power for a common RB I is $P_{comm,i} = P_{PSFCH} + 10\log_{10} M_i^{comm}$ : where $P_{PSFCH}$ is calculated as above $P_{PSFCH,k}$.

2) If N1 is less than or equal to Nmax, and the transmission power of N1 PSFCHs plus the transmission power of all common RBs to be transmitted exceeds $P_{CMAX}$, that is, the following condition is not satisfied:

$$\text{Pmini} + 10\log_{10}\left(N_1 + \sum_{i=1}^{M(N1)} M_i^{comm}\right) \leq P_{CMAX};$$

then the process of the UE determining the transmission of the N2 PSFCHs is as follows: firstly, if there are one or more PSFCHs carrying a HARQ-ACK, the one or more PSFCHs carrying the HARQ-ACK should be transmitted first according to the priority order (in a sequence from small priority value to large priority value, i.e., in an ascending order of the priority values); then, if there are one or more PSFCHs carrying conflict information, the one or more PSFCHs carrying the conflict information are transmitted according to the priority order (in a sequence from small priority value to large priority value, i.e., in an ascending order of the priority values), and it should be ensured N2 $\geq$ $\max(1, \sum_{l=1}^{L} M_l)$ , where L is the maximum value satisfying the following condition (if the L value satisfying the condition does not exist, then L is 0):

$$\text{Pmini} + 10\log_{10}\left(\max(1, \sum_{l=1}^{L} M_l) + \sum_{i=1}^{M(L)} M_i^{comm}\right) \leq P_{CMAX};$$

where M(L) is the number of RB sets occupied by $i\text{Nmax}(1, \sum_{l=1}^{L} M_l)$ or $\sum_{l=1}^{L} M_l$ PSFCHs when the value is L, that is, the number of corresponding common RBs to be transmitted.

The transmission power $P_{PSFCH,k}$ of one PSFCH k is equal to Pmini, or $P_{PSFCH,k} = P_{CMAX} - 10\log_{10}(N2 + \sum_{i=1}^{M(L)} M_i^{comm})$ , or is equal to the maximum value of the two values, or is equal to the minimum value of the two values. M(N2) is the number of the RB sets occupied by the N2 selected PSFCHs, that is, the number of the corresponding common RBs to be transmitted.

In this case, the transmission power for a common RB i is $P_{comm,i} = P_{PSFCH} + 10\log_{10} M_i^{comm}$ , where $P_{PSFCH}$ is calculated as above $P_{PSFCH,k}$.

3) If N1 is greater than Nmax, and the sum of the transmission power of Nmax PSFCHs selected according to the described priority order and the transmission power of all common RBs to be transmitted does not exceed $P_{CMAX}$, that is, the following condition is satisfied:

$$\text{Pmini} + 10\log_{10}\left(N_{max} + \sum_{i=1}^{M(Nmax)} M_i^{comm}\right) \leq P_{CMAX};$$

wherein M(Nmax) is the number of the RB sets or channels where Nmax PSFCHs are located, and $M_i^{comm}$ has the same meaning as that in the above example.

If the above condition is satisfied, N2=Nmax, and the transmission power $P_{PSFCH,k}$ of one PSFCH k is equal to Pmini, or $P_{PSFCH,k} = P_{CMAX} - 10\log_{10}(Nmax + \sum_{i=1}^{M(Nmax)} M_i^{comm})$ , or is equal to the maximum value of the two values, or is equal to the minimum value of the two values.

In this case, the transmission power for a common RB i is $P_{PSFCH,k}$, where $P_{PSFCH}$ is calculated as above $P_{PSFCH,k}$.

4) If N1 is greater than Nmax, and the sum of the transmission power of Nmax PSFCHs selected according to the above priority order and the transmission power of all common RBs to be transmitted exceeds $P_{CMAX}$, that is, the following condition is not satisfied:

$$Pmini + 10\log_{10}\left(N_{max} + \sum_{i=1}^{M(Nmax)} M_i^{comm}\right) \leq P_{CMAX};$$

then the process of the UE determining the transmission of the N2 PSFCHs is as follows: firstly, if there are one or more PSFCHs carrying a HARQ-ACK, the one or more PSFCHs carrying the HARQ-ACK should be transmitted first according to the priority order (in a sequence from small priority value to large priority value, i.e., in an ascending order of the priority values); then, if there are one or more PSFCHs carrying conflict information, the one or more PSFCHs carrying the conflict information are transmitted according to the priority order (in a sequence from small priority value to large priority value, i.e.,

in an ascending order of the priority values), and it should be ensured N2 $\geq$ $\dfrac{\max(1, \sum_{l=1}^{L} M_l)}{}$ , where L is the maximum value satisfying the following condition (if the L value satisfying the condition does not exist, then L is 0):

$$Pmini + 10\log_{10}\left(\max(1, \sum_{l=1}^{L} M_l) + \sum_{i=1}^{M(L)} M_i^{comm}\right) \leq P_{CMAX};$$

where M(L) is the number of RB sets occupied by $i Nmax(1, \sum_{l=1}^{L} M_l)$ or $\sum_{l=1}^{L} M_l$ PSFCH when the value is L, that is, the number of corresponding common RBs to be transmitted.

The transmission power $P_{PSFCH,k}$ of one PSFCH k is equal to Pmini, or $P_{PSFCH,k} = P_{CMAX} - 10\log_{10}(N2 + \sum_{i=1}^{M(L)} M_i^{comm})$ , or is equal to the maximum value of the two values, or is equal to the minimum value of the two values. M(N2) is the number of the RB sets occupied by the N2 selected PSFCHs, that is, the number of the corresponding common RBs to be transmitted.

In this case, the transmission power for a common RB i is $P_{comm,i} = P_{PSFCH} + 10\log_{10} M_i^{comm}$ , where $P_{PSFCH}$ is calculated as above $P_{PSFCH,k}$.

Example 11

In an example, the transmission power of a PRB in a common RB is different from the transmission power of a PSFCH PRB, for example, the power of a PRB in a common RB is X times the power of a PSFCH PRB, where X is a rational number, then the configuration or definition of X as a value less than 1 can reduce the power of the common RB. In conclusion, the common RB and the PSFCH PRB can have different PSDs or EPREs. If the minimum transmission power of one PSFCH PRB is set to Pmini, then the minimum transmission power of a PRB in one common RB is X times Pmini, or equivalently the dB value thereof is offset by Y.

1) If N1 is less than or equal to Nmax, and the sum of the transmission power of N1 PSFCHs plus the transmission power of all common RBs to be transmitted does not exceed $P_{CMAX}$, that is, the condition is satisfied:

$$Pmini + 10\log_{10}\left(N_1 + X * \sum_{i=1}^{M(N1)} M_i^{comm}\right) \leq P_{CMAX};$$

wherein M(N1) is the number of the RB sets or channels in which N1 PSFCHs are located, and $M_i^{comm}$ has the same meaning as that in the above example.

If the foregoing condition is satisfied, N2=N1, and the transmission power $P_{PSFCH,k}$ of one PSFCH k is equal to Pmini, or $P_{PSFCH,k} = P_{CMAX} - 10\log_{10}(N1 + X * \sum_{i=1}^{M(N1)} M_i^{comm})$, or is equal to the maximum value of the two values, or is equal to the minimum value of the two values.

In this case, the transmission power for a common RB i is $P_{comm,i} = P_{PSFCH} + 10\log_{10}X * M_i^{comm}$, where $P_{PSFCH}$ is calculated as above $P_{PSFCH,k}$.

2) If N1 is less than or equal to Nmax, and the transmission power of N1 PSFCHs plus the transmission power of all common RBs to be transmitted exceeds N1, that is, the following condition is not satisfied:

$$Pmini + 10\log_{10}\left(N_1 + X * \sum_{i=1}^{M(N1)} M_i^{comm}\right) \leq P_{CMAX};$$

then the process of the UE determining the transmission of the N2 PSFCHs is as follows: firstly, if there are one or more PSFCHs carrying a HARQ-ACK, the one or more PSFCHs carrying the HARQ-ACK should be transmitted first according to the priority order (in a sequence from small priority value to large priority value, i.e., in an ascending order of the priority values); then, if there are one or more PSFCHs carrying conflict information, the one or more PSFCHs carrying the conflict information are transmitted according to the priority order (in a sequence from small priority value to large priority value, i.e., in an ascending order of the priority values), and it is ensured $P_{PSFCH,k}$, where L is the maximum value satisfying the following condition (if the L value satisfying the condition does not exist, then L is 0):

$$Pmini + 10\log_{10}\left(\max(1, \sum_{l=1}^{L} M_l) + X * \sum_{i=1}^{M(L)} M_i^{comm}\right) \leq P_{CMAX};$$

where M(L) is the number of RB sets occupied by $iNmax(1, \sum_{l=1}^{L} M_l)$ or $\sum_{l=1}^{L} M_l$ PSFCHs when the value is L, that is, the number of corresponding common RBs to be transmitted.

The transmission power $P_{PSFCH,k}$ of one PSFCH k is equal to Pmini, or $P_{PSFCH,k} = P_{CMAX} - 10\log_{10}(N2 + \sum_{i=1}^{M(L)} M_i^{comm})$, or is equal to the maximum value of the two values, or is equal to the minimum value of the two values. M(N2) is the number of the RB sets occupied by the N2 selected PSFCHs, that is, the number of the corresponding common RBs to be transmitted.

In this case, the transmission power for a common RB i is $P_{comm,i} = P_{PSFCH} + 10\log_{10}X * M_i^{comm}$, where $P_{PSFCH}$ is calculated as above $P_{PSFCH,k}$.

3) If N1 is greater than Nmax, and the sum of the transmission power of Nmax PSFCHs selected according to the described priority order and the transmission power of all common RBs to be transmitted does not exceed $P_{CMAX}$, that is, the following condition is satisfied:

$$Pmini + 10\log_{10}\left(N_{max} + X * \sum_{i=1}^{M(Nmax)} M_i^{comm}\right) \leq P_{CMAX};$$

wherein M(Nmax) is the number of the RB sets or channels where Nmax PSFCHs are located, and $M_i^{comm}$ has the same meaning as that in the above example.

If the above condition is satisfied, N2=Nmax, and the transmission power $P_{PSFCH,k}$ of one PSFCH k is equal to Pmini, or $P_{PSFCH,k} = P_{CMAX} - 10\log_{10}(Nmax + X * \sum_{i=1}^{M(Nmax)} M_i^{comm})$, or is equal to the maximum value of the two values, or is equal to the minimum value of the two values.

In this case, the transmission power for a common RB i is $P_{comm,i} = P_{PSFCH} + 10\log_{10}X * M_i^{comm}$, where $P_{PSFCH}$ is calculated as above $P_{PSFCH,k}$.

4) If N1 is greater than Nmax, and the sum of the transmission power of Nmax PSFCHs selected according to the above priority order and the transmission power of all common RBs to be transmitted exceeds N1, that is the following condition is not satisfied:

$$Pmini + 10\log_{10}\left(N_{max} + X * \sum_{i=1}^{M(Nmax)} M_i^{comm}\right) \leq P_{CMAX};$$

then the process of the UE determining the transmission of the N2 PSFCHs is as follows: firstly, if there are one or more PSFCHs carrying a HARQ-ACK, the one or more PSFCHs carrying the HARQ-ACK should be transmitted first according to the priority order (in a sequence from small priority value to large priority value, i.e., in an ascending order of the priority values); then, if there are one or more PSFCHs carrying conflict information, the one or more PSFCHs carrying the conflict information are transmitted according to the priority order (in a sequence from small priority value to large priority value, i.e., in an ascending order of the priority values), and it should be ensured $N2 \geq \frac{\max(1, \sum_{l=1}^{L} M_l)}{}$, where L is the maximum value satisfying the following condition (if the L value satisfying the condition does not exist, then L is 0):

$$\text{Pmini} + 10\log_{10}\left(\max(1, \sum_{l=1}^{L} M_l) + X * \sum_{i=1}^{M(L)} M_i^{comm}\right) \leq P_{CMAX};$$

where M(L) is the number of RB sets occupied by $\text{iNmax}(1, \sum_{l=1}^{L} M_l)$ or $\sum_{l=1}^{L} M_l$ PSFCHs when the value is L, that is, the number of corresponding common RBs to be transmitted.

The transmission power $P_{PSFCH,k}$ of one PSFCH k is equal to Pmini, or $P_{PSFCH,k} = P_{CMAX} - 10\log_{10}(N2 + X * \sum_{i=1}^{M(L)} M_i^{comm})$, or is equal to the maximum value of the two values, or is equal to the minimum value of the two values. M(N2) is the number of the RB sets occupied by the N2 selected PSFCHs, that is, the number of the corresponding common RBs to be transmitted.

In this case, the transmission power for a common RB i is $P_{comm,i} = P_{PSFCH} + 10\log_{10}X * M_i^{comm}$, where $P_{PSFCH}$ is calculated as above $P_{PSFCH,k}$.

Example 12

In an example, the transmission power of one common PRB in common RBs is X times the transmission power of one PSFCH PRB, and X being equal to 1 represents that the two are the same, that is, common RBs and PSFCH RBs have the same PSD or EPRE. The minimum transmission power of one PSFCH PRB is Pmini, then $P_{comm\_one} = P_{PSFCH} + 10\log_{10}X$. Different from Example 10, in this example, when the transmission power of the determined N2 PSFCHs plus the transmission power of all common RBs to be transmitted exceeds $P_{CMAX}$, the number of the PSFCHs to be transmitted is ensured as much as possible in this example, and the number of common PRBs to be transmitted may be reduced.

In an example, when it is determined that the transmission power of N2 PSFCHs does not exceed $P_{CMAX}$, the transmission power $P_{PSFCH,k}$ of one PSFCH k is equal to Pmini, and then the remaining power excluding the power of the PSFCHs is used for transmitting up to L common PRBs, and the maximum number L of the common PRBs that are able to be transmitted is obtained by dividing the remaining power by $P_{comm\_one}$ and rounding down.

The determination of the N2 value can be implemented in a manner as described in the previous example, optionally including:

1) If N1 is less than or equal to Nmax and the transmission power of N1 PSFCHs does not exceed $P_{CMAX}$, N2 = N1;

2) If N1 is less than or equal to Nmax and the transmission power of N1 PSFCHs exceeds $P_{CMAX}$ the UE determines N2 PSFCHs to be transmitted under the condition that the maximum transmission power is not exceeded according to the described priority order;

3) If N1 is greater than Nmax and the transmission power of Nmax PSFCHs selected according to the described priority order does not exceed $P_{CMAX}$, N2 = Nmax;

4) If N1 is greater than Nmax, and the transmission power of Nmax PSFCHs selected according to the described priority order exceeds $P_{CMAX}$, the UE determines the N2 PSFCHs to be transmitted according to the described priority order in the case where the maximum transmission power is not exceeded.

In an example, when the common PRBs to be transmitted are selected, common PRBs capable of satisfying the OCB requirement may be first selected. For example, one RB set may be divided into several unit bandwidths, for example, one RB set is 20 MHz, and one unit bandwidth is 2 MHz/5MHz. In a case where there is a PSFCH transmitted in one unit bandwidth, a common PRB in the unit bandwidth may not be transmitted, and if no PSFCH is transmitted in one unit bandwidth, a common PRB may be filled and transmitted. That is, in an example, the common PRB and the PSFCH PRB are distributed in one RB set as evenly as possible to satisfy the OCB requirement.

Example 13

In an example, only ensuring the transmission power of a PSFCH PRB is sufficient, the minimum transmission power of a PSFCH PRB is set to be Pmini, and the transmission power for a common PRB can be reduced. Unlike Example 10, in the present example, when it is determined that the power is limited, the number and power of the PSFCHs to be transmitted are ensured as far as possible, and the transmission power of the common PRBs can be reduced.

In an example, under the condition that it is determined that the transmission power of N2 PSFCHs does not exceed $P_{CMAX}$, the transmission power $P_{PSFCH,k}$ of one PSFCH k is equal to Pmini, then the remaining power after removing the power of the PSFCHs is used for sending M(N2) common RBs, M(N2) being M(N2) common RBs corresponding to the N2 PSFCHs, and specifically, the remaining power is allocated to the M(N2) common RBs with the same power spectrum density.

The determination of the N2 value can be as described in the previous example, optionally including:

1) If N1 is less than or equal to Nmax and the transmission power of N1 PSFCHs does not exceed $P_{CMAX}$, N2 = N1;

2) If N1 is less than or equal to Nmax and the transmission power of N1 PSFCHs exceeds $P_{CMAX}$, the UE determines N2 PSFCHs to be transmitted under the condition that the maximum transmission power is not exceeded according to the described priority order;

3) If N1 is greater than Nmax and the transmission power of Nmax PSFCHs selected according to the described priority order does not exceed $P_{CMAX}$, N2 = Nmax;

4) If N1 is greater than Nmax, and the transmission power of Nmax PSFCHs selected according to the described priority order exceeds $P_{CMAX}$, the UE determines the N2 PSFCHs to be transmitted according to the described priority order in the case where the maximum transmission power is not exceeded.

In an example, when the common PRBs to be transmitted are selected, common PRBs capable of satisfying the OCB requirement may be first selected. For example, one RB set may be divided into several unit bandwidths, for example, one RB set is 20 MHz, and one unit bandwidth is 2 MHz/5MHz. In a case where there is a PSFCH transmitted in one unit bandwidth, a common PRB in the unit bandwidth may not be transmitted, and if no PSFCH is transmitted in one unit bandwidth, a common PRB may be filled and transmitted. That is, in an example, the common PRB and the PSFCH PRB are distributed in one RB set as evenly as possible to satisfy the OCB requirement.

It should be noted that the present disclosure solves the power control when the PSFCH transmitted by the Sidelink device in the unlicensed band satisfies the OCB requirement: for different scenarios (with or without DL power control), there are the following methods:

(1) determining N2 feedbacks that can be transmitted from N1 feedbacks that need to be transmitted, and determining common RBs corresponding to the N2 feedbacks;

(2) considering the determination of N2 and common RBs in a scenario with a plurality of RB sets involved;

(3) determining the power of the PSFCHs; and

(4) determining the power of the common RBs.

Through the description of the foregoing embodiments, those having ordinary skill in the art may clearly understand that the information determination method according to the foregoing embodiments may be implemented by software in addition to a necessary universal hardware platform, and definitely may also be implemented by hardware. However, in many cases, the former is a preferred implementation. Based on such understanding, the essence of the technical solutions of the present disclosure or the part contributing to the related art may be embodied in the form of a software product. The computer software product is stored in a storage medium (such as a ROM/RAM, a magnetic disk, or an optical disk), and includes several instructions for instructing a terminal device (which may be a mobile phone, a computer, a server, or a network device) to execute the information determination methods described in the embodiments of the present disclosure.

An information determination device is also provided in this embodiment. The information determination device is configured to implement the described embodiments and exemplary implementations, and what has been described will not be elaborated. The term "module", as used hereinafter, is a combination of software and/or hardware capable of realizing a predetermined function. Although the apparatus described in the following embodiment is preferably implemented by software, implementation of hardware or a combination of software and hardware is also possible and conceived.

Fig. 4 is a structural block diagram of an information determination device according to the embodiments of the present disclosure. As shown in Fig. 4, the information determination device includes:

a determination module 42, configured to determine a number N2 of Physical Sidelink Feedback Channels (PSFCHs) simultaneously transmitted by a User Equipment (UE) on one PSFCH occasion, and transmission power of the N2 PSFCHs, and determine common resource blocks corresponding to the N2 PSFCHs and transmission power of the common resource blocks in a following manner: determining that N2 is equal to N1, or determining that N2 is equal to Nmax, or determining the N2 PSFCHs from N1 PSFCHs according to a priority order of the N1 PSFCHs; determining that transmission power of a PSFCH is required power of the PSFCH, or determining that the transmission power of the PSFCH is X times maximum power of the UE, or determining that the transmission power of the PSFCH is a maximum or minimum value among the required power of the PSFCH and X times the maximum power of the UE, where X is a rational number not greater than 1; transmitting the determined N2 PSFCHs and the common resource blocks corresponding to the N2 PSFCHs, wherein a sum of the transmission power of the common resource blocks and the transmission power of the N2 PSFCHs is less than or equal to the maximum power of the UE; and determining that transmission power of a common resource block is required power of the common resource block, or determining that the transmission power of the common resource block is Y times the maximum power of the UE, or determining that the transmission power of the common resource block is a maximum or minimum value among the required power of the common resource block and Y times the maximum power of the UE, where Y is a rational number not greater than 1; wherein N1 is a number of PSFCHs that need to be transmitted on the one PSFCH occasion, and Nmax is a maximum number of PSFCHs that are able to be transmitted on the one PSFCH occasion.

By means of the information determination device, the problem in the related art regarding power control when a PSFCH transmitted by a sidelink device in an unlicensed band cannot satisfy an OCB requirement is solved, so that the power control when the OCB requirement is satisfied is achieved when the sidelink device sends the PSFCH in the unlicensed band.

In an exemplary embodiment, the determination module 42 is further configured to determine the number N2 of the PSFCHs simultaneously transmitted by the UE on the one PSFCH occasion by means of at least one of: in a case where N1 is less than or equal to Nmax, and power required for transmitting N1 PSFCHs and common resource blocks corresponding to the N1 PSFCHs does not exceed the maximum power of the UE, N2 is equal to N1; in a case where N1 is greater than Nmax, and power required for transmitting Nmax PSFCHs and common resource blocks corresponding to the Nmax PSFCHs does not exceed the maximum power of the UE, determining Nmax PSFCHs from the N1 PSFCHs according to the priority order of the N1 PSFCHs, wherein N2 is equal to Nmax; determining the N2 PSFCHs from the N1 PSFCHs according to the priority order of the N1 PSFCHs.

In an exemplary embodiment, the determination module 42 is further configured to determine the N2 PSFCHs from the N1 PSFCHs according to the priority order of the N1 PSFCHs in the following manner: in a case where the N1 PSFCHs include one or more PSFCHs carrying an HARQ-ACK, transmitting the one or more PSFCHs carrying the HARQ-ACK according to the priority order; and then in a case where there are one or more PSFCHs carrying conflict information, sending the one or more PSFCHs carrying the conflict information according to the priority order; wherein N2 is greater than or equal to 1; or N2 is greater than or equal to $\max\left(1, \sum_{i=1}^{K} M_i\right)$; wherein $M_i$ is a number of PSFCHs that carry the HARQ-ACK and have a priority of i or is a number of PSFCHs that carry the conflict information and have a priority of i-8; in a case where there are values of K that satisfy a condition that power required for transmitting $\max\left(1, \sum_{i=1}^{K} M_i\right)$ PSFCHs and common resource blocks corresponding to the $\max\left(1, \sum_{i=1}^{K} M_i\right)$ PSFCHs does not exceed the maximum power of the UE, then K is set to be a maximum value among the values of K that satisfy the condition, and in a case where there are no values of K that satisfy the condition that the power required for transmitting the $\max\left(1, \sum_{i=1}^{K} M_i\right)$ PSFCHs and the common resource blocks corresponding to the $\max\left(1, \sum_{i=1}^{K} M_i\right)$ PSFCHs does not exceed the maximum power of the UE, then K is equal to 0.

In an exemplary embodiment, the required power of the PSFCH includes PSFCH power determined by a configured PSFCH power control parameter; the required power of the common resource block includes common resource block power determined by the configured PSFCH power control parameter or a common resource block power control parameter.

In an exemplary embodiment, X is equal to a ratio of a bandwidth occupied for transmitting one PSFCH to a bandwidth occupied for transmitting the N2 PSFCHs and the common resource blocks corresponding to the N2 PSFCHs; or, X is equal to a ratio of the bandwidth occupied for transmitting one PSFCH to a first value, wherein the first value is a sum of a bandwidth occupied for transmitting the N2 PSFCHs and m times a bandwidth occupied for transmitting the common resource blocks corresponding to the N2 PSFCHs, and m is a ratio of a power spectrum density of the common resource block to a power spectrum density of the PSFCH.

In an exemplary embodiment, Y is equal to a ratio of a bandwidth occupied for transmitting the common resource block to a bandwidth occupied for transmitting the N2 PSFCHs and the common resource blocks corresponding to the N2 PSFCHs; or, Y is equal to a ratio of m times the bandwidth occupied for transmitting the common resource block to a second value, wherein the second value is a sum of the bandwidth occupied for transmitting the N2 PSFCHs and m times a bandwidth occupied for transmitting the common resource blocks corresponding to the N2 PSFCHs, and m is a ratio of a power spectrum density of the common resource block to a power spectrum density of the PSFCH.

In an exemplary embodiment, one PSFCH of the N2 PSFCHs and a common resource block corresponding to the one PSFCH are located on a same Resource Block (RB) set .

In an exemplary embodiment, a number of common Physical Resource Blocks (PRBs) included in a common resource block i of one RB set i is $M_i^{comm}$, wherein the numbers of common PRBs included in common resource blocks corresponding to different RB sets are the same or different, and relative frequency domain positions of the common resource blocks on the different RB sets are the same or different.

In an exemplary embodiment, N1 is a number of PSFCHs scheduled to be transmitted by the UE; or N1 is a number of PSFCHs scheduled to be transmitted on one or more channels successfully accessed by the UE through a Listen Before Talk (LBT) procedure.

It should be noted that each module may be implemented by software or hardware. The latter may be implemented in the following manner, but is not limited thereto. All the modules are located in a same processor; alternatively, the modules are located in different processors in an arbitrary combination.

The embodiments of the present disclosure also provide a computer readable storage medium. The computer readable storage medium stores a computer program, wherein the computer program is configured to execute the operations in any one of the described method embodiments during running.

In an exemplary embodiment, the computer readable storage medium may include, but is not limited to, any medium that can store a computer program, such as a Universal Serial Bus (USB) flash drive, a Read-Only Memory (ROM), a Random Access Memory (RAM), a removable hard disk, a magnetic disk, or an optical disc.

The embodiments of the present disclosure further provide an electronic device, including a memory and a processor. The memory stores a computer program. The processor is configured to run the computer program to execute operations in any one of the method embodiments.

In an exemplary embodiment, the electronic device can further include a transmission device and an input/output device, wherein the transmission device is connected to the processor, and the input/output device is connected to the processor.

For specific examples in this embodiment, reference may be made to the examples described in the foregoing embodiments and exemplary embodiments, and details are not repeatedly described in this embodiment.

Obviously, those having ordinary skill in the art should understand that each module or each operation of the present disclosure may be implemented by a universal computing device, and the modules or operations may be concentrated on a single computing device or distributed on a network formed by a plurality of computing devices, and may be implemented by program codes executable for the computing devices, so that the modules or operations may be stored in a storage device for execution with the computing devices, the shown or described operations may be executed in sequences different from those described here in some cases, or may form each integrated circuit module respectively, or multiple modules or operations therein may form a single integrated circuit module for implementation. As such, the present disclosure is not limited to any particular hardware and software combination.

The foregoing descriptions are merely exemplary embodiments of the present disclosure, but are not intended to limit the present disclosure. For those having ordinary skill in the art, the present disclosure may have various modifications and variations. Any modifications, equivalent replacements, improvements and the like made within the principle of the present disclosure shall belong to the scope of protection of the present disclosure.

**Claims**

**1.** An information determination method, comprising:
determining a number N2 of Physical Sidelink Feedback Channels, PSFCHs, simultaneously transmitted by a User Equipment, UE, on one PSFCH occasion, and transmission power of the N2 PSFCHs, and determining common resource blocks corresponding to the N2 PSFCHs and transmission power of the common resource blocks in a following manner:

determining that N2 is equal to N1, or determining that N2 is equal to Nmax, or determining the N2 PSFCHs from N1 PSFCHs according to a priority order of the N1 PSFCHs;

determining that transmission power of a PSFCH is required power of the PSFCH, or determining that the transmission power of the PSFCH is X times maximum power of the UE, or determining that the transmission power of the PSFCH is a maximum or minimum value among the required power of the PSFCH and X times the maximum power of the UE, where X is a rational number not greater than 1;

transmitting the determined N2 PSFCHs and the common resource blocks corresponding to the N2 PSFCHs, wherein a sum of the transmission power of the common resource blocks and the transmission power of the N2 PSFCHs is less than or equal to the maximum power of the UE; and

determining that transmission power of a common resource block is required power of the common resource block, or determining that the transmission power of the common resource block is Y times the maximum power of the UE, or determining that the transmission power of the common resource block is a maximum or minimum value among the required power of the common resource block and Y times the maximum power of the UE, where Y is a rational number not greater than 1;

wherein N1 is a number of PSFCHs that need to be transmitted on the one PSFCH occasion, and Nmax is a maximum number of PSFCHs that are able to be transmitted on the one PSFCH occasion.

2. The information determination method according to claim 1, wherein determining the number N2 of the PSFCHs simultaneously transmitted by the UE on the one PSFCH occasion comprises at least one of:

in a case where N1 is less than or equal to Nmax, and power required for transmitting N1 PSFCHs and common resource blocks corresponding to the N1 PSFCHs does not exceed the maximum power of the UE, N2 is equal to N1;

in a case where N1 is greater than Nmax, and power required for transmitting Nmax PSFCHs and common resource blocks corresponding to the Nmax PSFCHs does not exceed the maximum power of the UE, determining Nmax PSFCHs from the N1 PSFCHs according to the priority order of the N1 PSFCHs, wherein N2 is equal to Nmax;

determining the N2 PSFCHs from the N1 PSFCHs according to the priority order of the N1 PSFCHs.

3. The information determination method according to claim 1, wherein determining the N2 PSFCHs from the N1 PSFCHs according to the priority order of the N1 PSFCHs comprises:

in a case where the N1 PSFCHs comprise one or more PSFCHs carrying an HARQ-ACK, transmitting the one or more PSFCHs carrying the HARQ-ACK according to the priority order; and then in a case where there are one or more PSFCHs carrying conflict information, sending the one or more PSFCHs carrying the conflict information according to the priority order; wherein

N2 is greater than or equal to 1; or

N2 is greater than or equal to $\max\left(1, \sum_{i=1}^{K} M_i\right)$; wherein $M_i$ is a number of PSFCHs that carry the HARQ-ACK and have a priority of i or is a number of PSFCHs that carry the conflict information and have a priority of i-8; in a case where there are values of K that satisfy a condition that power required for transmitting $\max\left(1, \sum_{i=1}^{K} M_i\right)$ PSFCHs and common resource blocks corresponding to the $\max\left(1, \sum_{i=1}^{K} M_i\right)$ PSFCHs does not exceed the maximum power of the UE, then K is set to be a maximum value among the values of K that satisfy the condition, and in a case where there are no values of K that satisfy the condition that the power required for transmitting the $\max\left(1, \sum_{i=1}^{K} M_i\right)$ PSFCHs and the common resource blocks corresponding to the $\max\left(1, \sum_{i=1}^{K} M_i\right)$ PSFCHs does not exceed the maximum power of the UE, then K is equal to 0.

4. The information determination method according to claim 1, wherein

the required power of the PSFCH comprises PSFCH power determined by a configured PSFCH power control parameter;

the required power of the common resource block comprises common resource block power determined by the configured PSFCH power control parameter or a common resource block power control parameter.

5. The information determination method according to claim 1, wherein X is equal to a ratio of a bandwidth occupied for transmitting one PSFCH to a bandwidth occupied for transmitting the N2 PSFCHs and the common resource blocks corresponding to the N2 PSFCHs; or,

X is equal to a ratio of the bandwidth occupied for transmitting one PSFCH to a first value, wherein the first value is a sum of a bandwidth occupied for transmitting the N2 PSFCHs and m times a bandwidth occupied for transmitting the common resource blocks corresponding to the N2 PSFCHs, and m is a ratio of a power spectrum density of the common resource block to a power spectrum density of the PSFCH.

6. The information determination method according to claim 1, wherein Y is equal to a ratio of a bandwidth occupied for transmitting the common resource block to a bandwidth occupied for transmitting the N2 PSFCHs and the common resource blocks corresponding to the N2 PSFCHs; or,

Y is equal to a ratio of m times the bandwidth occupied for transmitting the common resource block to a second value, wherein the second value is a sum of the bandwidth occupied for transmitting the N2 PSFCHs and m times a bandwidth occupied for transmitting the common resource blocks corresponding to the N2 PSFCHs, and m is a ratio of a power spectrum density of the common resource block to a power spectrum density of the PSFCH.

7. The information determination method according to claim 1, further comprising:
one PSFCH of the N2 PSFCHs and a common resource block corresponding to the one PSFCH are located on a same Resource Block, RB, set.

8. The information determination method according to claim 7, further comprising:
a number of common Physical Resource Blocks, PRBs, comprised in a common resource block i of one RB set i is $M_i^{comm}$, wherein the numbers of common PRBs comprised in common resource blocks corresponding to different RB sets are the same or different, and relative frequency domain positions of the common resource blocks on the different RB sets are the same or different.

9. The information determination method according to claim 1, further comprising:
N1 is a number of PSFCHs scheduled to be transmitted by the UE; or N1 is a number of PSFCHs scheduled to be transmitted on one or more channels successfully accessed by the UE through a Listen Before Talk, LBT, procedure.

10. An information determination device, comprising:
a determination module, configured to determine a number N2 of Physical Sidelink Feedback Channels, PSFCHs, simultaneously transmitted by a User Equipment, UE, on one PSFCH occasion, and transmission power of the N2 PSFCHs, and determine common resource blocks corresponding to the N2 PSFCHs and transmission power of the common resource blocks in a following manner:

determining that N2 is equal to N1, or determining that N2 is equal to Nmax, or determining the N2 PSFCHs from N1 PSFCHs according to a priority order of the N1 PSFCHs;
determining that transmission power of a PSFCH is required power of the PSFCH, or determining that the transmission power of the PSFCH is X times maximum power of the UE, or determining that the transmission power of the PSFCH is a maximum or minimum value among the required power of the PSFCH and X times the maximum power of the UE, where X is a rational number not greater than 1;
transmitting the determined N2 PSFCHs and the common resource blocks corresponding to the N2 PSFCHs, wherein a sum of the transmission power of the common resource blocks and the transmission power of the N2 PSFCHs is less than or equal to the maximum power of the UE; and
determining that transmission power of a common resource block is required power of the common resource block, or determining that the transmission power of the common resource block is Y times the maximum power of the UE, or determining that the transmission power of the common resource block is a maximum or minimum value among the required power of the common resource block and Y times the maximum power of the UE, where Y is a rational number not greater than 1;
wherein N1 is a number of PSFCHs that need to be transmitted on the one PSFCH occasion, and Nmax is a maximum number of PSFCHs that are able to be transmitted on the one PSFCH occasion.

11. A computer readable storage medium, wherein the computer readable storage medium stores a computer program, and the computer program, when running on a processor, is configured to execute the information determination method according to any one of claims 1 to 9.

12. An electronic device, comprising a memory and a processor, wherein the memory stores a computer program, and the processor is configured to run the computer program so as to execute the information determination method according to any one of claims 1 to 9.

# Fig. 1

Input output device
108

Transmission
device 106

Processor 102

Memory
104

## Fig. 2

Determining a number N2 of Physical Sidelink Feedback Channels (PSFCHs) simultaneously transmitted by a User Equipment (UE) on one PSFCH occasion, and transmission power of the N2 PSFCHs, and determining common resource blocks corresponding to the N2 PSFCHs and transmission power of the common resource blocks in a following manner:

determining that N2 is equal to N1, or determining that N2 is equal to Nmax, or determining the N2 PSFCHs from N1 PSFCHs according to a priority order of the N1 PSFCHs;

determining that transmission power of a PSFCH is required power of the PSFCH, or determining that the transmission power of the PSFCH is X times maximum power of the UE, or determining that the transmission power of the PSFCH is a maximum or minimum value among the required power of the PSFCH and X times the maximum power of the UE, where X is a rational number not greater than 1;

transmitting the determined N2 PSFCHs and the common resource blocks corresponding to the N2 PSFCHs, wherein a sum of the transmission power of the common resource blocks and the transmission power of the N2 PSFCHs is less than or equal to the maximum power of the UE; and

determining that transmission power of a common resource block is required power of the common resource block, or determining that the transmission power of the common resource block is Y times the maximum power of the UE, or determining that the transmission power of the common resource block is a maximum or minimum value among the required power of the common resource block and Y times the maximum power of the UE, where Y is a rational number not greater than 1;

wherein N1 is a number of PSFCHs that need to be transmitted on the one PSFCH occasion, and Nmax is a maximum number of PSFCHs that are able to be transmitted on the one PSFCH occasion

S202

**Fig. 3**

Channel 1

| Common PRB |
| PSFCH PRB |
| Other PRB |
| å |
| PSFCH PRB |
| PSFCH PRB |
| Common PRB |
| å |

Common RB associated with PSFCH on Channel 1

Channel 2

| Common PRB |
| PSFCH PRB |
| Other PRB |
| å |
| PSFCH PRB |
| PSFCH PRB |
| Common PRB |
| å |

Common RB associated with PSFCH on Channel 2

**Fig. 4**

Determination module 42

Information determination device

## INTERNATIONAL SEARCH REPORT

| International application No. |
|---|
| **PCT/CN2023/107766** |

**A. CLASSIFICATION OF SUBJECT MATTER**

H04W28/02(2009.01)i; H04W72/044(2023.01)i

According to International Patent Classification (IPC) or to both national classification and IPC

**B. FIELDS SEARCHED**

Minimum documentation searched (classification system followed by classification symbols)

IPC: H04W; H04L

Documentation searched other than minimum documentation to the extent that such documents are included in the fields searched

Electronic data base consulted during the international search (name of data base and, where practicable, search terms used)

CNTXT; WPABSC; ENTXTC; WPABS; ENTXT; VEN; CNKI; 3GPP: 物理边链路反馈信道, 时机, 发射功率, 需求功率, 最大功率, 公共资源块, 优先级, 功率, PSFCH, occasion, transmitting power, common resource block, required power, maximum power, power, priority

**C. DOCUMENTS CONSIDERED TO BE RELEVANT**

| Category* | Citation of document, with indication, where appropriate, of the relevant passages | Relevant to claim No. |
|---|---|---|
| PX | CN 115915261 A (ZTE CORP.) 04 April 2023 (2023-04-04)<br>claims 1-12 | 1-12 |
| A | CN 112653541 A (HUAWEI TECHNOLOGIES CO., LTD.) 13 April 2021 (2021-04-13)<br>entire document | 1-12 |
| A | CN 113453196 A (VIVO COMMUNICATION TECHNOLOGY CO., LTD.) 28 September 2021 (2021-09-28)<br>entire document | 1-12 |
| A | US 2022109527 A1 (LG ELECTRONICS INC.) 07 April 2022 (2022-04-07)<br>entire document | 1-12 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 November 2023** | **07 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/107766**

| Patent document cited in search report | | | Publication date (day/month/year) | Patent family member(s) | | | Publication date (day/month/year) |
|---|---|---|---|---|---|---|---|
| CN | 115915261 | A | 04 April 2023 | None | | | |
| CN | 112653541 | A | 13 April 2021 | None | | | |
| CN | 113453196 | A | 28 September 2021 | None | | | |
| US | 2022109527 | A1 | 07 April 2022 | EP | 3907914 | A1 | 10 November 2021 |
| | | | | EP | 3907914 | A4 | 23 March 2022 |
| | | | | JP | 2022518255 | A | 14 March 2022 |
| | | | | JP | 7278391 | B2 | 19 May 2023 |
| | | | | WO | 2020153721 | A1 | 30 July 2020 |
| | | | | KR | 20210097206 | A | 06 August 2021 |

Form PCT/ISA/210 (patent family annex) (July 2022)

**REFERENCES CITED IN THE DESCRIPTION**

**Patent documents cited in the description**

- CN 202210916786